(19) Europäisches Patentamt
European Patent Office
Office européen des brevets

(11) EP 4 046 709 A1

(12) **EUROPEAN PATENT APPLICATION**
published in accordance with Art. 153(4) EPC

(43) Date of publication:
**24.08.2022 Bulletin 2022/34**

(21) Application number: **20877026.3**

(22) Date of filing: **06.10.2020**

(51) International Patent Classification (IPC):
***B01J 23/63*** *(2006.01)* ***B01D 53/94*** *(2006.01)*
***B01J 37/02*** *(2006.01)* ***B01J 37/08*** *(2006.01)*
***B01J 37/16*** *(2006.01)* ***F01N 3/10*** *(2006.01)*
***F01N 3/28*** *(2006.01)*

(52) Cooperative Patent Classification (CPC):
**B01D 53/94; B01J 23/63; B01J 37/02; B01J 37/08; B01J 37/16; F01N 3/10; F01N 3/28**

(86) International application number:
**PCT/JP2020/037855**

(87) International publication number:
**WO 2021/075313 (22.04.2021 Gazette 2021/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.10.2019 JP 2019191486**

(71) Applicant: **Umicore Shokubai Japan Co., Ltd.**
**Tokoname-shi**
**Aichi 479-0882 (JP)**

(72) Inventors:
- **KOITO Yusuke**
**Kobe-shi, Hyogo 650-0047 (JP)**
- **DORNHAUS Franz**
**Kobe-shi, Hyogo 650-0047 (JP)**

(74) Representative: **Banse & Steglich**
**Patentanwälte PartmbB**
**Patentanwaltskanzlei**
**Herzog-Heinrich-Straße 23**
**80336 München (DE)**

(54) **EXHAUST GAS PURIFICATION CATALYST, EXHAUST GAS PURIFICATION METHOD, AND METHOD FOR MANUFACTURING EXHAUST GAS PURIFICATION CATALYST**

(57) A three-dimensional structure (10); and a catalytic component (100) that contains a precious metal complex (22) containing platinum and palladium and a porous material (21), which is supported on the three-dimensional structure (10); where the surface accumulation C (Pt) of the platinum is 0.00070 or more to 0.01000 or less, the surface accumulation C (Pd) of the palladium is 0.00800 or more to 0.10000 or less, the surface accumulation C (Pt) is expressed by $C (Pt) = P_{XPS} (Pt) / (d^2 \times P_{TEM} (Pt) \times 0.01)$, and the surface accumulation C (Pd) is expressed by $C (Pd) = P_{XPS} (Pd) / (d^2 \times P_{TEM} (Pd) \times 0.01)$.

FIG. 1A

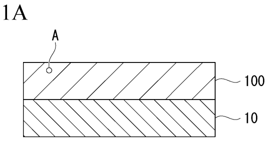


FIG. 1B

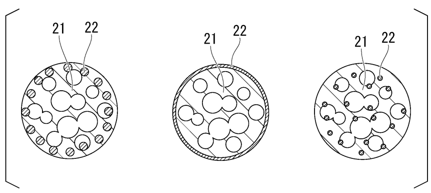


EP 4 046 709 A1

## Description

### Technical Field

The present invention relates to an exhaust gas purification catalyst, a method of purifying exhaust gas, and a method of manufacturing an exhaust gas purification catalyst.

### Background of the Invention

Exhaust gas regulations require a high level of exhaust gas treatment. Normally, in order to purify exhaust gas, a precious metal such as platinum or the like is supported on a porous material such as alumina or the like. However, precious metals are easily agglomerated (sintered) and become larger when exposed to high temperature exhaust gas. The larger precious metal has a reduced surface area available for contact with the exhaust gas. Therefore, a problem occurs where exhaust gas purification performance decreases as compared to before the enlargement. In order to solve this problem, a core-shell catalyst containing a metal and porous material has been proposed (Non-Patent Document 1).

Furthermore, platinum nanoparticles have been proposed, which are prepared by using a colloidal dispersion liquid and particles where 90% or more of the platinum is fully reduced, a dispersing medium containing a polar solvent, a water-soluble polymer suspension stabilizer, and a reducing agent, and heating at 85° C for 12 hours. A catalyst has been proposed, in which the dispersion of atomic platinum is higher than that of a conventional platinum/alumina catalyst by applying the nanoparticles to an alumina carrier (Patent Document 1).

Exhaust gas regulations are tightening worldwide year by year and are expected to tighten further in the future. Therefore, there is demand for the development of catalysts that exhibit superior exhaust gas purification performance.

### Prior Art Documents

#### Patent Documents

Patent Document 1: Japanese Unexamined Patent Application Publication (Translation of PCT Application) No. 2018-502982

#### [Non-patent literature]

Non-Patent Document 1: J. Hu, RSC Advances, August 17, 2016, Volume 6, Issue 85, pages 81767 to 81773

### Summary of the Invention

#### Technical Problem

However, core-shell catalysts are prone to sintering due to the colliding of core-shell particles when exposed to high temperature exhaust gas, and thus the catalytic performance of core-shell catalysts is likely to be reduced. Furthermore, as the particle diameter of the precious metal decreases, the precious metal particles can move more easily when exposed to the high temperature exhaust gas. As a result, the catalytic performance is not sufficient even if precious metal nanoparticles are supported.

In view of the foregoing, an object of the present invention is to provide an exhaust gas purification catalyst in which the number of precious metals that can contact exhaust gas can be increased by supporting (surface accumulating) a large number of precious metal complexes having a predetermined size in the vicinity of a surface of a porous material, without forming a precious metal shell on the surface of a porous material. Furthermore, another object of the present invention is to provide a method of preparing an exhaust gas purification catalyst in which a large amount of precious metal is supported in the vicinity of a surface of a porous material. Furthermore, an object is to provide a method of purifying exhaust gas using an exhaust gas purification catalyst prepared by the catalyst preparation method.

#### Solution to the Problem

In order to solve the aforementioned problems, the present inventors conducted extensive studies. As a result, it was found that the performance of a catalyst is improved when a catalytic metal is present in a predetermined state. In view of the foregoing, the following aspects are employed in the present application to solve the problems described above.

(1) An exhaust gas purification catalyst according to a first aspect contains: a three-dimensional structure; and a catalytic component which contains a precious metal complex containing platinum and palladium and a porous material, which is supported on the three-dimensional structure; wherein the surface accumulation C (Pt) of the platinum is 0.00070 or more to 0.01000 or less, the surface accumulation C (Pd) of the palladium is 0.00800 or more to 0.10000 or less, the surface accumulation C (Pt) is expressed by C (Pt) = $P_{XPS}$ (Pt) / ($d^2 \times P_{TEM}$ (Pt) $\times$ 0.01), and the surface accumulation C (Pd) is expressed by C (Pd) = $P_{XPS}$ (Pd) / ($d^2 \times P_{TEM}$ (Pd) $\times$ 0.01), where the d represents a crystallite diameter of the precious metal complex, determined by X-ray diffractometry (XRD), the $P_{XPS}$ (Pt) represents the mass percentage concentration of the platinum with regard to the catalytic component, determined by X-ray photoelectron spectroscopy (XPS), the $P_{XPS}$ (Pd) represents the mass percentage concentration of the palladium with regard to the catalytic component, determined by X-ray photoelectron spectroscopy (XPS), the $P_{TEM}$ (Pt) represents the mass percentage concentration of the platinum with regard to the precious metal complex, determined by transmission electron microscopy-energy dispersive X-ray spectroscopy (TEM-EDS), and the $P_{TEM}$ (Pd) represents the mass percentage concentration of the palladium with regard to the precious metal complex, determined by transmission electron microscopy-energy dispersive X-ray spectroscopy (TEM-EDS).
(2) In the exhaust gas purification catalyst according to the aspect described above, the aforementioned d may be 1 nm or more to 50 nm or less.
(3) A method of purifying exhaust gas according to a second aspect includes a step of causing exhaust gas to flow through the exhaust gas purification catalyst according to the aspect described above.
(4) A method of manufacturing an exhaust gas purification catalyst according to a third aspect including: a first step of obtaining a precious metal solution containing platinum, palladium, and a protective agent; a second step of mixing the precious metal solution with a reducing agent to obtain a reducing solution; a third step of mixing the reducing solution with a porous material to obtain a slurry; a fourth step of applying the slurry on a three-dimensional structure; and a fifth step of heating the slurry; where, in the second step, the temperature of the precious metal solution and the reducing agent is 10° C or more to 40° C or less.
(5) In the method of manufacturing an exhaust gas purification catalyst according to the aspect described above, the precious metal solution may contain 2 g/L or more to 50 g/L or less of the protective agent.
(6) In the method of manufacturing an exhaust gas purification catalyst according to the aspect described above, the molar ratio of the reducing agent to the precious metal in the reducing solution may be 0.2 or more and 1.6 or less.

Advantageous Effects of the Invention

The exhaust gas purification catalyst according to the aspect described above can provide excellent exhaust gas purification performance.
Furthermore, the exhaust gas purification method according to the aspect described above can efficiently purify exhaust gas even after having been exposed to high temperature exhaust gas. Furthermore, the method of manufacturing an exhaust gas purification catalyst according to the aspect described above can provide an exhaust gas purification catalyst having excellent exhaust gas purification performance.

Brief Description of Drawings

FIG. 1A is a cross-sectional schematic diagram of an exhaust gas purification catalyst according to the embodiments.
FIG. 1B is an enlarged schematic view of a catalyst component 100.
FIG. 2 is a diagram of C(Pt) and C(Pd) plotted against the molar ratio of ascorbic acid to the total number of mols of Pt and Pd (AA / (Pt + Pd)).
FIG. 3 is a diagram of T50 plotted against the molar ratio of ascorbic acid to the total number of mols of Pt and Pd (AA / (Pt + Pd)).

## EMBODIMENTS OF THE INVENTION

The embodiments will be described in detail hereinafter with reference to the drawings as appropriate. To facilitate an understanding of the features of the present invention, the drawings used in the following descriptions may show enlarged portions serving as the features, and the dimensional proportions of each of these components may differ from the actual dimensions. Materials, dimensions, and the like indicated in the following descriptions are examples. The present invention is not limited thereto, and may be carried out by making appropriate changes within a scope that does not change the gist of the present invention.
An exhaust gas purification catalyst of the present embodiment will be described with reference to the cross-sectional schematic diagram illustrated in FIG. 1A and the enlarged view illustrated in FIG. 1B. FIG. 1B is an enlarged schematic view of a portion indicated by "A" in FIG. 1A. The exhaust gas purification catalyst according to the present embodiment contains a three-dimensional structure 10 and a catalytic component 100 supported on the three-dimensional structure 10. The catalytic component 100 of the present embodiment contains: a precious metal complex 22 containing platinum (Pt) and palladium (Pd); and a porous material 21. The catalytic component 100 preferably has a layered structure and is coated (supported) onto the three-dimensional structure 10. Hereinafter, the catalytic component 100 coated (supported) onto the three-dimensional structure 10 is an exhaust gas purification catalyst, and the component containing the precious metal complex 22 and the porous material 21 which is coated (supported) onto the three-dimensional structure 10 is the catalytic component 100. The catalytic component 100 may contain an auxiliary catalytic component.

FIG. 1B depicts three schematically enlarged views of the catalytic component 100. The enlarged view in the center in which the precious metal complex 22 covers the porous material 21 to form a core-shell structure and the enlarged view on the right side in which the precious metal complex 22 is mainly supported inside the porous material 21 are cross-sectional schematic views of catalysts prepared by a conventional impregnation method and pore filling method. On the other hand, the cross-sectional schematic view of the catalyst according to the present embodiment is the enlarged view on the left side in which fine particles of the precious metal complex 22 are supported mainly near the surface of the porous material 21.

Carbon monoxide (CO) and hydrocarbons (HC) in the exhaust gas of an internal combustion engine come into contact with the precious metal complex 22 in the process of diffusing through the pores of the catalyst layer, and the purification reaction progresses. Therefore, the probability of contact between the exhaust gas and the precious metal complex 22 increases if the precious metal complex 22 is more present near the surface than inside the porous material 21. However, in a conventional catalyst, the precious metal complex 22 easily penetrates into the inside of the porous material 21 during the preparation process, and the percentage of the precious metal complex 22 present near the surface of the porous material 21 is low.

On the other hand, in the catalyst of the present embodiment, the precious metal complex 22 is present in a relatively small amount inside the porous material 21 and in a relatively large amount near the surface of the porous material 21. From the perspective of precious metal dispersibility, the structure is preferably not a structure in which the precious metal complex 22 is present only on the surface and the porous material 21 is present in the interior (core-shell structure). Therefore, the catalyst in the present embodiment preferably has a large number of the precious metal complexes 22 near the surface relative to the porous material 21, but preferably not in a core-shell state. Furthermore, the average concentration of the precious metal complex 22 relative to the porous material 21 is preferably higher than the concentration of the precious metal complex 22 at the center of the porous material 21. Herein, an index of the ratio of the precious metal complex 22 present near the surface of the porous material 21 to the precious metal complex 22 present in the entire porous material is defined as the surface accumulation by the following formula.

(Surface accumulation)

In the catalytic component of the present embodiment, palladium and platinum have a predetermined surface accumulation. A surface accumulationC(M) for a precious metal to be analyzed is expressed by

$$C(M) = P_{XPS}(M) / (d^2 \times P_{TEM}(M) \times 0.01).$$

Herein, d represents the crystallite diameter of the precious metal complex determined by X-ray diffractometry (XRD). $P_{XPS}$ (M) represents the mass percent concentration of the precious metal M relative to the catalytic component, as determined by X-ray photoelectron spectroscopy (XPS). $P_{TEM}$ (M) represents the mass percent concentration of the precious metal M relative to the precious metal complex, as determined by transmission electron microscopy-energy dispersive X-ray spectroscopy (TEM-EDS). In order to measure the surface accumulation under exposure to hot exhaust gases, the XRD, XPS, and TEM-EDS described above measure catalysts that had been circulated with 700° C air containing 10% by volume of water for 40 hours.

When determining the crystallite diameter d of a precious metal complex by XRD, the crystallite diameter d is calculated from the half width value of the (111) peak of Pt or Pd using Scherrer's formula. More specifically, a half width value $\beta$ at a peak of $2\theta$ = 39.60° is obtained, and the crystallite diameter d is obtained by applying the X-ray wavelength $\lambda$, Bragg angle $\theta$, and half width value $\beta$ in the following formula.

$$d = K\lambda / \beta \cos\theta$$

For XPS measurement, the catalytic component is removed from the three-dimensional structure, particulate material which was coarsely pulverized in a mortar is fixed to a carbon tape, the inside of the device is evacuated, and then the measurement is performed. The beam diameter of XPS measurement is significantly larger than the size of the porous material or precious metal complex, and therefore, XPS measurements provide average information on the entire surface of the catalytic component. Specifically, when the precious metal complex is supported inside the porous material, the peak of the precious metal complex in the XPS measurement becomes faint or is not detected. Therefore, $P_{XPS}$ (M) relates to the average composition of the entire surface of the catalytic component, which reflects the distribution of the position of the precious metal complex inside the catalytic component. XPS analysis can be used to determine the mass percent concentration of the precious metal M near the surface of the catalytic component.

Compositional analysis by TEM-EDS can analyze the composition of the precious metal complexes because only a small region can be targeted for analysis. Therefore, $P_{TEM}$(M) is independent of the distribution of the position of the precious metal complex in the catalytic component. As a result, the surface accumulation C(M) is a parameter that represents the degree of unevenness in the distribution of the precious metal M to be analyzed on the surface. In other words, a large surface accumulation C(M) means that the precious metal M to be analyzed is more unevenly distributed near the surface of the catalytic component. TEM-EDS measurement can be performed on any 30 precious metal complexes and the average values thereof can be used to calculate $P_{TEM}$ (M).

The surface accumulation C(Pt) of the platinum in the present embodiment is 0.00070 or more to 0.01000 or less, preferably 0.00090 or more to 0.00600 or less, more preferably 0.00110 or more to 0.00400 or less, and most preferably 0.00190 or more to 0.00350 or less. The surface accumulation C(Pd) of palladium is 0.00800 or more to 0.10000 or less, preferably 0.01100 or more to 0.08000 or less, more preferably 0.01500 or more to 0.07000 or less, and most preferably 0.03300 or more to 0.06500 or less.

When the surface accumulation C(Pt) of platinum and the surface accumulation C(Pd) of palladium are within the aforementioned ranges, a catalytic metal can easily come into contact with exhaust gas, and thus high catalytic performance can be achieved.

The ratio of the palladium surface accumulation C(Pd) to the platinum surface accumulation C(Pt) in the present embodiment is preferably 4.7 or more to 49 or less, more preferably 12.5 or more to 26 or less, more preferably 13.5 or more to 23 or less, and most preferably 17 or more to 20 or less.

(Precious metal complex)

The precious metal complex contains at least platinum and palladium. The precious metal complex may also contain a precious metal other than platinum and palladium, such as rhodium or the like. The composition of the precious metals may be changed as appropriate corresponding to the gas composition of the exhaust gas. The ratio of platinum and palladium included in the precious metal complex is not limited. For example, the mass ratio of platinum to palladium may be 0.1 or more to 50 or less, and is preferably 1.0 or more to 10 or less. The precious metal complex may be a mixture of multiple types of precious metals.

The crystallite diameter d of the precious metal complex determined by XRD is preferably 1 nm or more to 50 nm or less, more preferably 1 nm or more to 30 nm or less, and even more preferably 1 nm or more to 10 nm or less. By adopting a crystallite diameter d in this range, the number of active sites per mass unit of the precious metal complex can be increased, resulting in an efficiently obtained high catalytic performance.

The amount of the precious metals can be appropriately changed based on the engine displacement, the exhaust gas flow rate per volume unit of catalyst (SV ($h^{-1}$)), the composition of the exhaust gas, and the like.

The amount of palladium relative to the catalytic component is preferably 0.01% by mass or more to 10% by mass or less, more preferably 0.1% by mass or more to 5% by mass or less, and even more preferably 0.2% by mass or more to 2% by mass or less.

The amount of platinum relative to the catalytic component is preferably 0.01% by mass or more to 10% by mass or less, more preferably 0.1% by mass or more to 5% by mass or less, and even more preferably 0.3% by mass or more to 3% by mass or less.

The amount of the precious metal complex relative to the amount of the porous material is preferably 0.1% by mass or more to 20% by mass or less, more preferably 0.5% by mass or more to 10% by mass or less, and even more preferably 1% by mass or more to 5% by mass or less. When the amount of the precious metal complex relative to the amount of the porous material is within the aforementioned range, the precious metal complex can be sufficiently dispersed, and high catalytic performance can be achieved.

When the catalytic component is supported on the three-dimensional structure, the supported amount of the precious metal complex in terms of metal, relative to the volume of the three-dimensional structure, is preferably 0.01 g/L or more to 30 g/L or less, more preferably 0.01 g/L or more to 10 g/L or less, and even more preferably 0.1 g/L or more to 5 g/L or less. By employing a supported amount in this range, sufficient purification performance can be achieved while avoiding the sintering of the precious metal complex.

The supported amount of palladium relative to the volume of the three-dimensional structure may be 0.01 g/L or more to 10 g/L or less, is preferably 0.1 g/L or more to 5 g/L or less, and even more preferably 0.2 g/L or more to 2 g/L or less. By employing a supported amount in this range, sufficient purification performance can be achieved while avoiding the sintering of palladium.
The supported amount of platinum relative to the volume of the three-dimensional structure may be 0.01 g/L or more to 10 g/L or less, is preferably 0.1 g/L or more to 5 g/L or less, and even more preferably 0.3 g/L or more to 3 g/L or less. By employing a supported amount in this range, sufficient purification performance can be achieved while avoiding the sintering of platinum.

(Porous material)

The porous material supports the precious metal complex. A porous material which is normally used for an exhaust gas purification catalyst can be used. For example, $\alpha$-alumina, $\gamma$-alumina, $\delta$-alumina, $\eta$-alumina, $\theta$-alumina, or other alumina, zirconia, silicon oxide (silica), or other single oxides, zirconia-alumina, lanthana-alumina, lanthana-zirconia, other composite oxides, or mixtures thereof may be used. $\gamma$-alumina, $\theta$-alumina, zeolite, or zirconia are preferred.
The porous material may contain a rare earth element such as lanthanum, yttrium, neodymium, praseodymium, or the like. When the porous material contains a rare earth element, the heat resistance of the porous material is improved. The porous material particularly preferably contains lanthanum.
The form of the porous material is not limited. The BET (Brunauer-Emmett-Teller) specific surface area of the porous material is preferably 30 $m^2/g$ or more to 1000 $m^2/g$ or less, and more preferably 40 $m^2/g$ or more to 500 $m^2/g$ or less, and even more preferably 50 $m^2/g$ or more to 300 $m^2/g$ or less, in a BET specific surface area measurement using nitrogen gas. When the porous material has a BET specific surface area in the aforementioned range, the precious metal complex can be dispersed and supported. As a result, the catalytic performance of the catalytic component is improved.
The particle diameter of the porous material is not limited. When taking into consideration the uniformity of the slurry or the like, the average particle diameter of the porous material is preferably 0.5 $\mu$ m or more to 100 $\mu$ m or less, more preferably 1 $\mu$m m or more to 50 $\mu$ m or less, and even more preferably 2 $\mu$ m or more to 30 $\mu$ m or less. Herein, the particle diameter of the porous material is a median value (d50) of the particle diameter measured by the laser diffraction method.
When the catalytic component is supported on the three-dimensional structure, the supported amount of the porous material should be an amount normally used for an exhaust gas purification catalyst. Specifically, the supported amount of the porous material is preferably 20 g/L or more to 300 g/L or less, more preferably 50 g/L or more to 200 g/L or less, and even more preferably 80 g/L or more to 130 g/L or less, relative to the volume of the three-dimensional structure. By adopting a supported amount in this range, high catalytic performance can be achieved as a result of exhaust gas easily entering the catalytic component.

"Three-Dimensional Structure"

The catalytic component in the present embodiment is supported on a three-dimensional structure. The three-dimensional structure is a structure with internal channels through which exhaust gas can flow. The three-dimensional structure may be the same as one that used in a typical exhaust gas purification catalyst. The three-dimensional structure is preferably a refractory three-dimensional structure. A refractory three-dimensional structure refers to a three-dimensional structure in which the change in volume after heating relative to the volume prior to heating is less than 5%, even when heated to 1000° C or more in an air atmosphere.
The total length of the three-dimensional structure is not particularly limited, but is preferably 10 mm or more to 1000 mm or less, more preferably 15 mm or more to 500 mm or less, and even more preferably 20 mm or more to 300 mm or less. The three-dimensional structure may have a honeycomb-l ike structure. The "total length of the three-dimensional structure" is the length of the three-dimensional structure from the exhaust gas inlet side to the exhaust gas outlet side.
The number of channel openings in the end face of the three-dimensional structure may be set within an appropriate range in consideration of the type of the exhaust gas to be treated, gas flow rate, pressure loss, removal efficiency, and the like. For example, a cell density (number of cells/unit cross-sectional area) of 100 cells/square inch or more to 1200 cells/square inch or less is sufficient for use, and the cell density is preferably 200 cells/square inch or more to 900 cells/square inch or less and even more preferably 300 cells/square inch or more to 700 cells/square inch or less. The shape (cell shape) of the gas flow channels of the three-dimensional structure can be hexagonal, rectangular, triangular, corrugated, or the like. Each end face is partitioned by dividing walls, and the thickness of the dividing walls is preferably 1 mil or more (mil: 1/1000 of an inch) to 15 mils or less, more preferably 2 mils or more to 13 mils or less, and even more preferably 2.5 mils or more to 8 mils or less.

Either a flow-through type (open-flow type) or a wall-flow type may be used as the three-dimensional structure. In a flow-through type three-dimensional structure, a gas flow channels connect from the gas inflow side to the gas outflow side such that gas can pass through the flow channels as is. Meanwhile, in a wall-flow type three-dimensional structure, a gas inflow side is plugged in a checker pattern, and if one end face of a gas flow channel is open, then the other side of the same flow channel is closed. The wall-flow type three-dimensional structure allows gas to flow into another gas flow channel through fine pores present in the wall surface of the gas flow channel, and thus exhaust gas entering from the opening hole exits the three-dimensional structure through the other flow channel. The flow-through type three-dimensional structure has lower air resistance and lower exhaust gas pressure loss. Furthermore, the wall-flow type three-dimensional structure can also filter out particulate components included in the exhaust gas.

A material of the three-dimensional structure may be the same as that used in a typical exhaust gas purification catalyst. The three-dimensional structure may be made of metal, ceramic, or the like, and preferably cordierite, stainless steel, silicon carbide (SiC), mullite, alumina ($\alpha$-alumina), or silica. Cordierite, stainless steel, or SiC is more preferable. When the material of the three-dimensional structure is cordierite, stainless steel, or SiC, endurance improves.

(Other components)

The catalytic component can contain other components based on the purification target. For example, when purifying NOx, a Group II element that can absorb NOx may be included.

[Manufacturing Method of Exhaust Gas Purification Catalyst]

A manufacturing method for an exhaust gas purifying catalyst according to the present embodiment includes a first step, second step, third step, fourth step, and fifth step. The first step is a step of obtaining a precious metal solution containing platinum, palladium, and a protective agent. The second step is a step of mixing the obtained precious metal solution with a reducing agent to obtain a reducing solution. The third step is a step of mixing the obtained reducing solution with a porous material to obtain a slurry. The fourth step is a step of applying the obtained slurry onto a three-dimensional structure. The fifth step is a step of heating the applied slurry. In the second step, the temperature of the precious metal solution and the reducing agent is 10° C or more to 40° C or less.

(First step)

The first step is a step of protecting the precursor of the precious metal complex with a protective agent. The first step may include: a step of mixing a solution containing platinum, a solution containing palladium, and a protective agent; a step of mixing a solution containing platinum and palladium with a protective agent; or a step of mixing a solution containing platinum and a protective agent with a solution containing palladium and a protective agent. A solution containing platinum and a solution containing palladium are preferably added to a solution containing a protective agent. For example, a precious metal solution may be prepared by dripping a solution containing platinum and then dripping a solution containing palladium into a solution containing a protective agent.

The solvent of the precious metal solution is not particularly limited, and water or any organic solvent may be used. The solvent of the precious metal solution is preferably water or alcohol. Platinum and palladium are dissolved in the precious metal solution. In other words, platinum and palladium are present as ions in the precious metal solution. All precious metals are preferably present as ions in the precious metal solution.

The protective agent prevents precious metal nanoparticles from sintering and promotes adequate dispersion of the precious metal complex. The protective agent in the present embodiment is not particularly limited, and any protective agent capable of preventing the sintering of precious metal nanoparticles may be used. For example, the protective agent may be a polymer, a surfactant, a compound having a ligand, or the like. The protective agent is preferably free of metallic elements, and the protective agent more preferably contains hydrogen, carbon, oxygen, and nitrogen. Examples of preferred protective agents include polyvinyl alcohols (PVA), polyvinylpyrrolidones (PVP), polyethyleneimines (PEI) and polyacrylic acids (PA).

The concentration of the protecting agent in the precious metal solution is preferably 0.2% by mass or more to 5.0% by mass or less, and more preferably 0.5% by mass or more to 3.0% by mass or less. When the concentration of the protecting agent is within the aforementioned range, the particle diameter of the precious metal complex can be sufficiently reduced to increase the number of active sites of the catalytic component.

(Second step)

In the second step, the precursor of the precious metal complex protected in the first step is reduced by a reducing agent to generate precious metal nanoparticles. The generated precious metal nanoparticles are protected by the protective agent, which prevents the precious metal nanoparticles from sintering. Although the reducing agent used in the second step is not particularly limited, the reducing agent preferably does not contain a metal element. Examples of suitable reducing agents include hydrazines, sodium borohydride ($NaBH_4$), and organic acids. For example, an ascorbic acid is preferably used as the organic acid. At this time, a palladium source is preferably reduced to palladium by using the reducing agent, while platinum is preferably not reduced. The reducing agent does not contain a metal element, and therefore, contamination of the catalytic component with metal impurities can be avoided. In the second step, the reducing agent may be added to the precious metal solution, or the precious metal solution may be added to the reducing agent.

In the reducing solution, the molar ratio of the reducing agent to the precious metal is preferably 0.1 or more to 1.6 or less, more preferably 0.2 or more to 1.5 or less, and even more preferably 0.5 or more to 1.3 or less. When the molar ratio of the reducing agent to the precious metal is within the aforementioned range, precious metal ions can be sufficiently reduced without preventing the protective agent from protecting the precious metal nanoparticles. Furthermore, when the reducing agent is an ascorbic acid and the precious metals are Pt and Pd, the molar ratio of the ascorbic acid to the sum of Pt and Pd (AA / (Pt + Pd)) is preferably 0.1 or more to 1.6 or less, more preferably 0.2 or more to 1.5 or less, and even more preferably 0.5 or more to 1.3 or less.

In the second step, the temperature of the precious metal solution and the reducing agent is 10° C or more to 40° C or less. The second step is preferably performed at a temperature between 15° C or more to 35° C or less, and more preferably between 20° C or more and 30° C or less. By performing the second step at a temperature of 40° C or lower, the palladium source can be reduced while suppressing reduction of a platinum source. Reduction of the platinum source is suppressed, and reduction of the palladium source is performed to obtain a favorable level of surface accumulation .

(Third step)

In the third step, the precious metal nanoparticles adhered to the surface of the porous material. The precious metal nanoparticles are protected by the protective agent, and therefore, it is more difficult for the nanoparticles to enter the center of the porous material as compared to when the nanoparticles are not protected by the protective agent. As a result, the percentage of precious metal nanoparticles adhered near the surface of the porous material is considered to increase.

The pH of the slurry is preferably between 5.0 or more to 7.0 or less. The third step may include a step of adding a pH adjuster to adjust the pH of the slurry. The pH adjuster is not particularly limited, and alkali metal hydroxides, organic ammonium salts, basic compounds, and the like can be used as the pH adjuster. For example, tetraethylammonium hydroxide (TEAH) may be used as the pH adjuster.

(Fourth step)

In the fourth step, the slurry is applied on the three-dimensional structure. Application of the slurry may be performed by any known method. For example, the slurry may be applied onto the three-dimensional structure by a washcoat method or a doctor blade method.

(Fifth step)

The fifth step may include a drying step and a calcining step. The drying step is primarily a step for removing any unnecessary solvent. The calcining step is primarily a step of generating a precious metal complex suitable for a catalytic reaction from the precious metal nanoparticles attached to the porous material. The drying step and the calcining step may be performed as separate steps or may be performed continuously as the same step. Drying and calcining may each be performed independently in any atmosphere. For example, drying and calcining may be performed in air, in a reducing atmosphere containing a reducing gas such as hydrogen, in an inert gas atmosphere, or in a vacuum. Drying may be performed at a temperature of 0° C or more to 200° C or less, and preferably 50° C or more to 150° C or less, for 10 minutes or more to 10 hours or less. Calcining may be performed at a temperature of 200° C or more to 1000° C or less, and preferably 300° C or more to 600° C or less, for 10 minutes or more to 3 hours or less.

[Purification Method of Exhaust Gas]

In one embodiment, a method of purifying exhaust gas includes a step of causing exhaust gas to flow through the exhaust gas purification catalyst described above.

The method of purifying exhaust gas according to the present embodiment is particularly useful for a predetermined exhaust gas. The predetermined exhaust gas is an exhaust gas containing 10 ppm or more to 50,000 ppm or less of CO, containing 10 ppm or more to 50,000 ppm or less of a hydrocarbon in terms of carbon (C1), and containing 10 ppm or more to 50,000 ppm or less of nitrogen oxide. The CO of the exhaust gas having such a composition may be purified by oxidation, the hydrocarbon may be purified by oxidation, and the nitrogen oxide may be purified by reduction. In the present specification, the amount of hydrocarbon refers to the amount in terms of carbon (C1).

The amount of CO included in the exhaust gas is preferably 100 ppm or more to 10,000 ppm or less, and even more preferably 500 ppm or more to 5000 ppm or less. The amount of hydrocarbons included in the exhaust gas in terms of carbon is preferably 100 ppm or more to 30,000 ppm or less, and even more preferably 300 ppm or more to 20,000 ppm or less. The amount of nitrogen oxide included in the exhaust gas is preferably 100 ppm or more to 10,000 ppm or less, and even more preferably 300 ppm or more to 3000 ppm or less.

The method of purifying exhaust gas according to the present embodiment may be used to purify exhaust gas from an internal combustion engine, and particularly may be used to purify exhaust gas from a diesel engine. The exhaust gas may be supplied to the exhaust gas purification catalyst at a space velocity of 1000 $h^{-1}$ or more to 500,000 $h^{-1}$ or less, and preferably at a space velocity 5000 $h^{-1}$ or more to 150,000 $h^{-1}$ or less. Furthermore, the exhaust gas may be supplied at a linear velocity of 0.1 m/sec or more to 8.5 m/sec or less, and preferably at a linear velocity of 0.2 m/sec or more to 4.2 m/sec or less. When the exhaust gas is supplied at such a flow rate, the exhaust gas can be efficiently purified.

Furthermore, in the method of purifying exhaust gas according to the present embodiment, a high-temperature exhaust gas may be supplied in order to promote purification of the exhaust gas. For example, an exhaust gas of a temperature of 100° C or more to 1000° C or less may be supplied to the catalyst, and an exhaust gas of a temperature of 200° C or more to 600° C or less is preferably supplied. By supplying an exhaust gas at such a temperature, the exhaust gas can be purified with high efficiency while suppressing thermal aging of the catalyst.

## EXAMPLES

The present invention is described below in detail using Examples and Comparative Examples, but the present invention is not limited to the Examples so long as the effects of the present invention are produced.

### <Manufacturing of the Exhaust Gas Purification Catalyst>

### Example 1

An aqueous platinum nitrate solution, an aqueous palladium nitrate solution, La-containing $Al_2O_3$ (lanthanum-containing alumina) (containing 4 parts by mass of $La_2O_3$, where the median particle diameter d50 is 5 $\mu$m and the BET surface area is 172.4 $m^2/g$), polyvinylpyrrolidone (PVP), and ascorbic acid (AA) were weighed such that Pt: Pd: La-containing $Al_20_3$: PVP: AA had the mass ratios shown in Table 1. Weighed 5.1 g of PVP was dissolved in 250 mL of distilled water. The aqueous platinum nitrate solution was dripped by a pipette into the PVP solution, and then the aqueous palladium nitrate solution was dripped by a pipette into the PVP solution to obtain a precious metal solution containing platinum ions and palladium ions. The temperature of the precious metal solution was 25° C. The concentration of PVP in the precious metal solution was 20 g/L. Ascorbic acid was dissolved in 70° C warm water, which was then cooled to 25° C. The 25° C aqueous ascorbic acid solution was added to the 25° C precious metal solution and stirred for 15 minutes to obtain a reducing solution. The lanthanum-containing alumina was added to the obtained reducing solution and stirred for 2 hours to obtain a slurry a1. The pH of the slurry a1 was 5.0. At this time, the palladium nitrate was reduced, but the platinum nitrate was not reduced. Next, the slurry a1 was then wash coated onto a three-dimensional structure (24 mm diameter, 67 mm length, 400 cells/square inch, 4 mil wall thickness) made of cordierite. Thereafter, drying was performed at 150° C for 8 hours, and calcining was performed at 550° C for 30 minutes to obtain an exhaust gas purification catalyst A supported on the three-dimensional structure made of cordierite. Drying and calcining were performed in air. The supported amount of each component of the exhaust gas purification catalyst to the volume of the three-dimensional structure is shown in Table 2. The unit in Table 2 is [g/L].

### Example 2

An aqueous platinum nitrate solution, an aqueous palladium nitrate solution, La-containing $Al_2O_3$, PVP, and AA were weighed such that Pt: Pd: La-containing $Al_2O_3$: PVP: AA had the ratios shown in Table 1. Weighed 2.62 g of PVP was dissolved in 250 mL of distilled water. A slurry with a pH of 4.7 containing the raw materials was obtained by the same procedure as in Example 1. At this time, the palladium nitrate was reduced, but the platinum nitrate was not reduced. Ammonia was added to the slurry to obtain a slurry b with a pH of 5.1. Next, using the slurry b, an exhaust gas purification catalyst B supported on the three-dimensional structure made of cordierite was obtained by the same procedure as in Example 1.

Example 3

An exhaust gas purification catalyst C supported on the three-dimensional structure made of cordierite was obtained in the same manner as in Example 1, except that the raw material components were changed as shown in Table 1. The pH of the slurry c formed by mixing the reducing solution and lanthanum-containing alumina was 5.1.

Example 4

An exhaust gas purification catalyst D supported on the three-dimensional structure made of cordierite was obtained in the same manner as in Example 1, except that the raw material components were changed as shown in Table 1. The pH of the slurry d formed by mixing the reducing solution and lanthanum-containing alumina was 5.1.

Comparative Example 1

An exhaust gas purification catalyst E supported on the three-dimensional structure made of cordierite was obtained in the same manner as in Example 1, except AA was not used. In this instance, both palladium nitrate and platinum nitrate were not reduced. The pH of the slurry e formed by mixing the precious metal solution and lanthanum-containing alumina was 5.1.

Comparative Example 2

An exhaust gas purification catalyst F supported on the three-dimensional structure made of cordierite was obtained in the same manner as in Example 1, except that PVP and AA were not used. In this instance, both palladium nitrate and platinum nitrate were not reduced. The pH of the slurry f formed by mixing the precious metal solution and lanthanum-containing alumina was 4.9.

Comparative Example 3

An exhaust gas purification catalyst G supported on the three-dimensional structure made of cordierite was obtained in the same manner as in Example 1, except that the precious metal solution was heated to the temperature of 80° C, ascorbic acid was added to the 80° C precious metal solution, which was then stirred for 15 minutes to obtain a reducing solution. At this time, both the palladium nitrate and the platinum nitrate were reduced. The pH of the slurry g formed by mixing the precious metal solution and lanthanum-containing alumina was 4.9.

[Table 1]

| CATALYST | MASS RATIO | | | | | MOLAR RATIO |
|---|---|---|---|---|---|---|
| | Pt | Pd | $Al_2O_3$ CONTAINING La | PVP | AA | AA/(Pt+Pd) |
| A | 6.3 | 3.2 | 100 | 2.6 | 3.1 | 1.34 |
| B | 6.3 | 3.2 | 100 | 2.6 | 1.1 | 0.48 |
| C | 6.3 | 3.2 | 100 | 2.6 | 0.6 | 0.24 |
| D | 6.3 | 3.2 | 100 | 2.6 | 3.5 | 1.52 |
| E | 6.3 | 3.2 | 100 | 2. 6 | 0 | 0 |
| F | 6.3 | 3.2 | 100 | 0 | 0 | 0 |
| G | 6.3 | 3.2 | 100 | 2.6 | 3.1 | 1.34 |

[Table 2]

| CATALYST | Pt | Pd | $Al_2O_3$ | $La_2O_3$ | TOTAL |
|---|---|---|---|---|---|
| A | 1.3 | 0.7 | 96.0 | 4.0 | 102.0 |
| B | 1.3 | 0.7 | 96.0 | 4.0 | 102.0 |
| C | 1.3 | 0.7 | 96.0 | 4.0 | 102.0 |

(continued)

| CATALYST | Pt | Pd | $Al_2O_3$ | $La_2O_3$ | TOTAL |
|---|---|---|---|---|---|
| D | 1.3 | 0.7 | 96.0 | 4.0 | 102.0 |
| E | 1.3 | 0.7 | 96.0 | 4.0 | 102.0 |
| F | 1.3 | 0.7 | 96.0 | 4.0 | 102.0 |
| G | 1.3 | 0.7 | 96.0 | 4.0 | 102.0 |

[Endurance Test]

Endurance tests were conducted on the exhaust gas purification catalysts obtained from the Examples and Comparative Examples. The endurance tests were conducted by circulating 700° C air containing 10 volume percent of water for 40 hours through the exhaust gas purification catalysts.

<Evaluation of Exhaust Gas Purification Catalyst>

[X-Ray Diffraction (XRD) Measurement]

X-ray diffraction (XRD) measurements were performed on each catalyst after the endurance testing, and the crystallite diameter d of the precious metal complex was calculated. Expert Pro manufactured by Spectris Co., Ltd. was used for the measurements, and a copper tube was used as the X-ray tube. The X-ray wavelength A was 1.54056 Å. XRD measurements were performed on the exhaust gas purification catalysts both before and after the endurance tests. The measurement of crystallite diameter d was performed in accordance with JIS H 7805. The calculated crystallite diameters of the precious metal complexes are shown in Table 3.

[X-Ray Photoelectron Spectroscopy (XPS) Measurement]

The mass percent concentrations of platinum and palladium in the catalytic components ($P_{XPS}$ (Pt) and $P_{XPS}$ (Pd)) were calculated for each catalyst after the endurance test by performing XPS measurements.

The XPS measurement was performed using Quantera SXM (X-ray source: Al K$\alpha$) manufactured by ULVAC-PHI. The beam diameter was 100 $\mu$m, the beam output was 25 W-15 kV, and the beam irradiation time was 200 ms per point. A peak intensity of 2p for Al, a peak intensity of $4d_{5/2}$ for Pt, and the sum of $3d_{5/2}$ and $3d_{3/2}$ for Pd were measured, and each peak intensity was divided by the sensitivity factor of each peak to determine the molar ratio of Al, Pt, and Pd. Note that the peak intensity of Pd was defined as the sum of the peaks of both Pd and PdO. From the obtained molar ratios of Al, Pt and Pd, the mass ratio of $Al_2O_3$ to Pt and Pd was calculated. Based on the amount of lanthanum in the lanthanum-containing alumina used as a raw material (4% by mass of $La_2O_3$), the mass ratio of Pt, Pd, $Al_2O_3$, and $La_2O_3$ was calculated. The calculated $P_{XPS}$ (Pt) and $P_{XPS}$ (Pd) are shown in Table 3.

[Transmission Electron Microscopy-Energy Dispersive X-Ray Spectroscopy (TEM-EDS) Measurement]

TEM-EDS measurements were performed on each catalyst after the endurance test to obtain the mass percent concentrations of platinum and palladium ($P_{TEM}$ (Pt) and $P_{TEM}$ (Pd)) relative to the precious metal complex. For each sample, TEM-EDS measurements were performed on 30 arbitrarily selected precious metal complexes, and the average value of the 30 measurements was used as $P_{TEM}$ (Pt) and $P_{TEM}$ (Pd). The obtained $P_{TEM}$ (Pt) and $P_{TEM}$ (Pd) are shown in Table 3.

[Surface Accumulation]

The surface accumulation of platinum and palladium (C(Pt) and C(Pd)) of each catalyst after the endurance test was calculated from the crystallite diameter d, $P_{XPS}$ (Pt), $P_{XPS}$ (Pd), $P_{TEM}$ (Pt), and $P_{TEM}$ (Pd) of the precious metal complexes obtained as described above. C(Pt) and C(Pd) in the Examples and Comparative Examples are shown in Table 3.

[Table 3]

| CATALYST | CRYSTALLITE DIAMETER d [nm] OF THE PRECIOUS METAL COMPLEX AFTER ENDURANCE TEST | $P_{XPS}$ | | $P_{TEM}$ | | C | | C (Pd) / C (Pt) |
|---|---|---|---|---|---|---|---|---|
| | | (Pt) | (Pd) | (Pt) | (Pd) | (Pt) | (Pd) | |
| A | 18.9 | 0.8 | 7.0 | 67 | 33 | 0.00334 | 0.05938 | 17.8 |
| B | 17.0 | 0.4 | 3.0 | 68 | 32 | 0.00184 | 0.03284 | 17.8 |
| C | 17.7 | 0.2 | 1.7 | 61 | 39 | 0.00105 | 0.01388 | 13.2 |
| D | 27. 1 | 0.4 | 2.9 | 61 | 39 | 0.00081 | 0.00999 | 12.3 |
| E | 20.6 | 0.4 | 1.1 | 61 | 39 | 0.00148 | 0.00688 | 4.6 |
| F | 93.9 | 0.1 | 2.3 | 52 | 48 | 0.00002 | 0.00054 | 27.0 |
| G | 28.8 | 0.3 | 1.8 | 60 | 40 | 0.00060 | 0.00543 | 9.1 |

Referring to Table 3, it can be seen that the surface accumulation of the Examples is larger than that of the Comparative Examples. In other words, the exhaust gas purification catalysts according to the Examples has a larger ratio of platinum and palladium on the surface of the porous material than the exhaust gas purification catalysts according to the Comparative Examples.

For the catalysts A to D of the Examples using PVP and ascorbic acid, approximate curves were obtained by the least-squares method using the values of C(Pt) and C(Pd) regarding the molar ratio of ascorbic acid to the sum of Pt and Pd (AA / (Pt + Pd)). The results are respectively shown as solid lines in FIG. 2. Furthermore, the catalysts E, F, and G of the Comparative Examples are also shown in FIG. 2.

[Evaluation of Exhaust Gas Purification Performance]

The exhaust gas purification performance of the exhaust gas purification catalysts obtained in the Examples and Comparative Examples after the endurance test was evaluated. Each catalyst made into a cylindrical shape with a diameter of 24 mm and a length of 66 mm for the evaluation. A gas containing 1000 ppm of carbon monoxide (CO), 350 ppm of a hydrocarbon (HC) in terms of carbon (C1), 6% of $H_2O$, 80 ppm of NO, 12% of oxygen, 6% of $CO_2$, and a balance of nitrogen was used as the evaluation gas. The evaluation gas was circulated through each catalyst at a space velocity (SV) of 40000 ($h^{-1}$). While increasing the temperature of the catalyst from 100° C to 400° C, the composition of the gas after passing through the catalyst was measured, and the purification rates of CO and HC were calculated. The temperatures at which the purification rates of CO and HC reached 50% are expressed as T50 (CO) and T50 (HC), respectively. As the temperature T50 decreases, the purification performance of the catalyst increases. For the catalysts A to D of the Examples, approximate curves were obtained by the least-squares method using the values of T50 (CO) and T50 (HC) regarding the molar ratio of ascorbic acid to the sum of Pt and Pd (AA / (Pt + Pd)). The results are respectively shown as solid lines in FIG. 3. Furthermore, the catalysts E, F, and G of the Comparative Examples are also shown in FIG. 3.

Referring to the figure, it can be seen that, in general, the exhaust gas purification catalysts according to the Examples have a lower T50 than the exhaust gas purification catalysts according to the Comparative Examples.

Industrial Applicability

The exhaust gas purification catalyst according to the present disclosure can provide excellent exhaust gas purification performance.

The exhaust gas purification method according to the present disclosure can efficiently purify exhaust gas even after being exposed to high temperature exhaust gas.

The method of manufacturing an exhaust gas purification catalyst according to the present disclosure can provide an exhaust gas purification catalyst having excellent exhaust gas purification performance.

**DESCRIPTION OF REFERENCE NUMERALS**

10: Three-dimensional structure

21: Porous material
22: Precious metal complex
100: Catalytic component

## Claims

1. An exhaust gas purification catalyst, comprising:

   a three-dimensional structure; and
   a catalytic component that contains a precious metal complex containing platinum and palladium and a porous material, which is supported on the three-dimensional structure; wherein
   the surface accumulation C (Pt) of the platinum is 0.00070 or more to 0.01000 or less,
   the surface accumulation C (Pd) of the palladium is 0.00800 or more to 0.10000or less,
   the surface accumulation C (Pt) is expressed by C (Pt) = $P_{XPS}$ (Pt) / ($d^2 \times P_{TEM}$ (Pt) $\times$ 0.01), and
   the surface accumulation C (Pd) is expressed by C (Pd) = $P_{XPS}$ (Pd) / ($d^2 \times P_{TEM}$ (Pd) $\times$ 0.01), where
   the d represents a crystallite diameter of the precious metal complex, determined by an X-ray diffractometry (XRD),
   the $P_{XPS}$ (Pt) represents the mass percent concentration of the platinum regarding the catalytic component, determined by X-ray photoelectron spectroscopy (XPS),
   the $P_{XPS}$ (Pd) represents the mass percent concentration of the palladium regarding the catalytic component, determined by X-ray photoelectron spectroscopy (XPS),
   the $P_{TEM}$ (Pt) represents the mass percent concentration of the platinum regarding the precious metal complex, determined by transmission electron microscopy-energy dispersive X-ray spectroscopy (TEM-EDS), and
   the $P_{TEM}$ (Pd) represents the mass percent concentration of the palladium regarding the precious metal complex, determined by transmission electron microscopy-energy dispersive X-ray spectroscopy (TEM-EDS).

2. The exhaust gas purification catalyst according to claim 1, wherein d is 1 nm or more to 50 nm or less.

3. A method of purifying exhaust gas, comprising a step of causing exhaust gas to flow through the exhaust gas purification catalyst according to claim 1 or 2.

4. A method of manufacturing an exhaust gas purification catalyst, comprising:

   a first step of obtaining a precious metal solution containing platinum, palladium, and a protective agent;
   a second step of mixing the precious metal solution with a reducing agent to obtain a reducing solution;
   a third step of mixing the reducing solution with a porous material to obtain a slurry;
   a fourth step of applying the slurry on a three-dimensional structure; and
   a fifth step of heating the slurry; wherein
   in the second step, the temperature of the precious metal solution and reducing agent is 10° C or more to 40° C or less.

5. The method of manufacturing an exhaust gas purification catalyst according to claim 4, wherein the precious metal solution contains 2 g/L or more to 50 g/L or less of the protective agent.

6. The method of manufacturing an exhaust gas purification catalyst according to claim 4 or 5, wherein in the reducing solution, the molar ratio of the reducing agent to the precious metal is 0.2 or more to 1.6 or less.

FIG. 1A

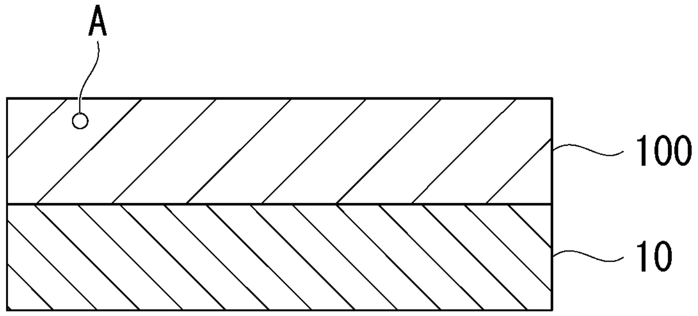


FIG. 1B

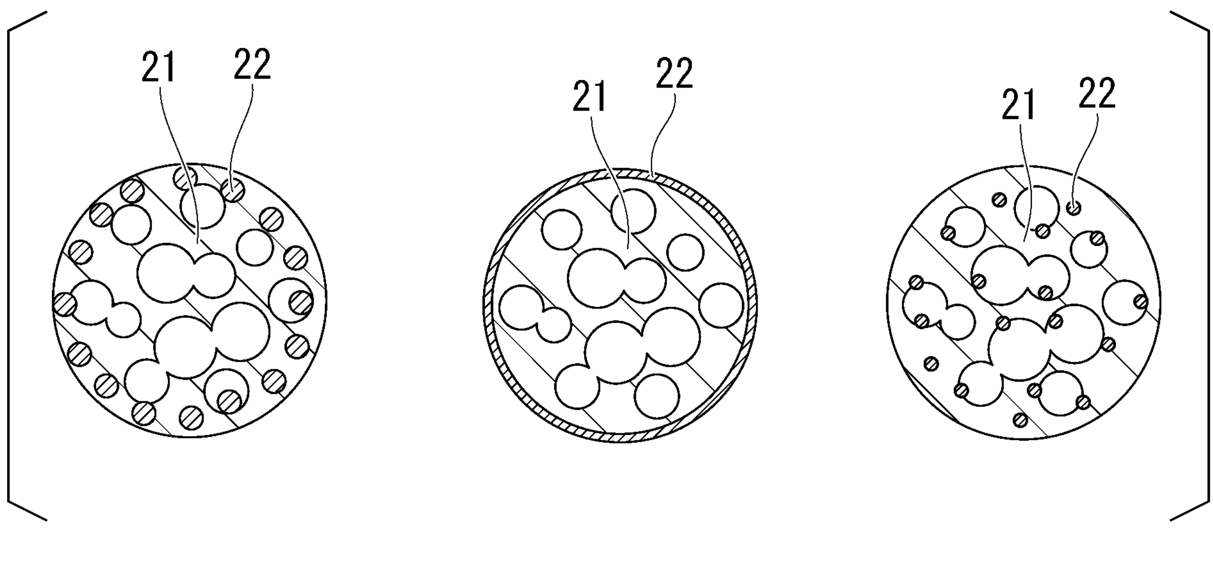

FIG. 2

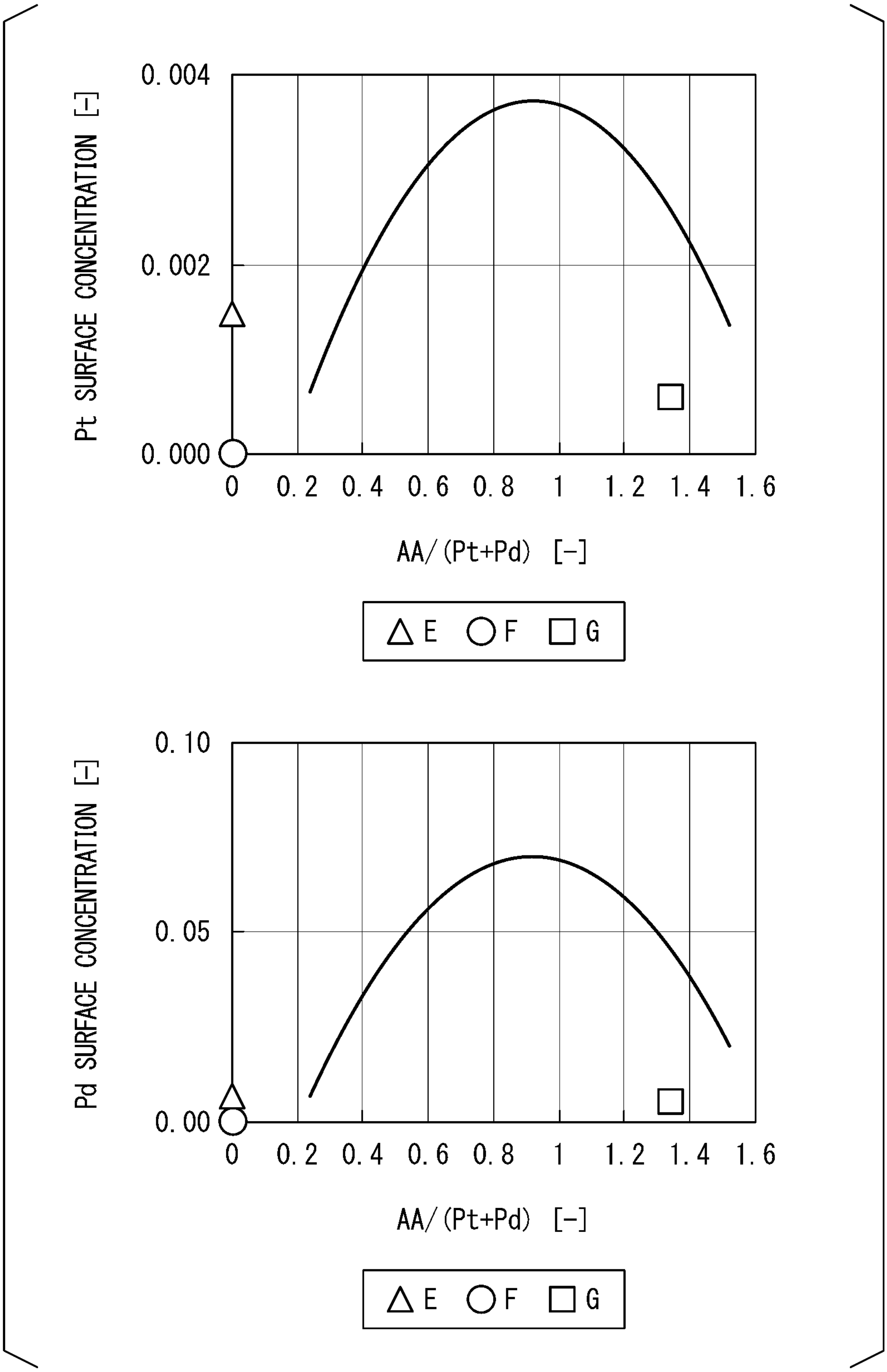
0.004
0.002
0.000
Pt SURFACE CONCENTRATION [-]
0 0.2 0.4 0.6 0.8 1 1.2 1.4 1.6
AA/(Pt+Pd) [-]
E F G
0.10
0.05
0.00
Pd SURFACE CONCENTRATION [-]
0 0.2 0.4 0.6 0.8 1 1.2 1.4 1.6
AA/(Pt+Pd) [-]
E F G

FIG. 3

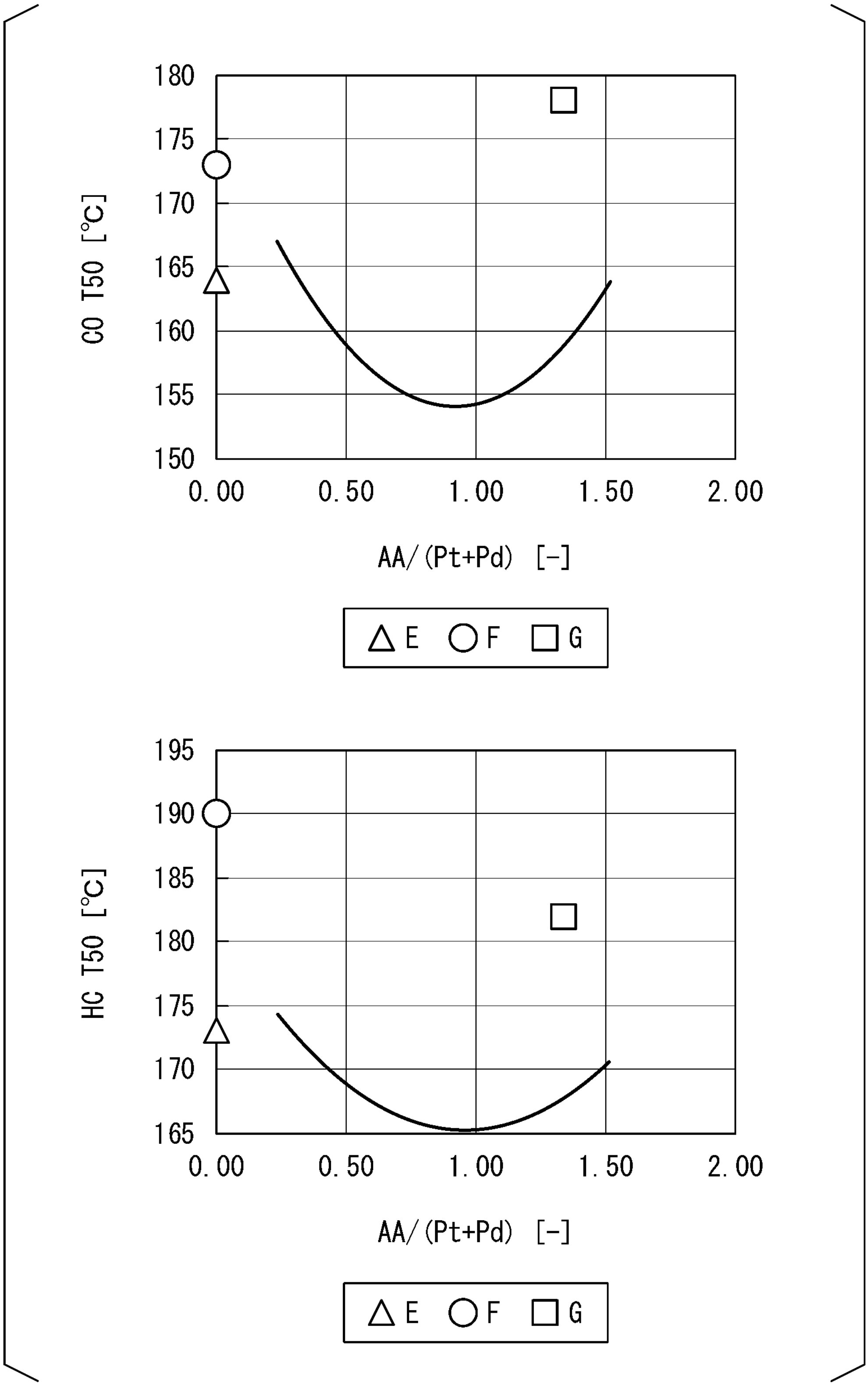
180
175
170
165
160
155
150
CO T50 [°C]
0.00
0.50
1.00
1.50
2.00
AA/(Pt+Pd) [-]
△E ○F □G
195
190
185
180
175
170
165
HC T50 [°C]
0.00
0.50
1.00
1.50
2.00
AA/(Pt+Pd) [-]
△E ○F □G

## INTERNATIONAL SEARCH REPORT

International application No. PCT/JP2020/037855

A. CLASSIFICATION OF SUBJECT MATTER

B01J 23/63(2006.01)i; B01D 53/94(2006.01)i; B01J 37/02(2006.01)i; B01J 37/08(2006.01)i; B01J 37/16(2006.01)i; F01N 3/10(2006.01)i; F01N 3/28(2006.01)i

FI: B01J23/63 A ZAB; B01J37/02 301C; B01J37/08; B01J37/16; B01D53/94 222; B01D53/94 245; B01D53/94 280; F01N3/10 A; F01N3/28 301P

According to International Patent Classification (IPC) or to both national classification and IPC

B. FIELDS SEARCHED

Minimum documentation searched (classification system followed by classification symbols)

B01D53/73; B01D53/86-53/90; B01D53/94; B01D53/96; B01J21/00-38/74; F01N3/00; F01N3/02; F01N3/04-3/38; F01N9/00- 11/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2019/159586 A1 (CATALER CORPORATION) 22 August 2019 (2019-08-22) entire text | 1-6 |
| A | JP 2013-220377 A (CATALER CORPORATION) 28 October 2013 (2013-10-28) entire text | 1-6 |
| A | JP 2016-010798 A (TOYOTA CENTRAL R&D LABS., INC.) 21 January 2016 (2016-01-21) entire text | 1-6 |
| A | JP 2017-159296 A (BASF CORPORATION) 14 September 2017 (2017-09-14) entire text | 1-6 |

☐ Further documents are listed in the continuation of Box C.  ☒ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 04 December 2020 (04.12.2020) | 15 December 2020 (15.12.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application no.
PCT/JP2020/037855

| Patent Documents referred in the Report | Publication Date | Patent Family | Publication Date |
|---|---|---|---|
| WO 2019/159586 A1 | 22 Aug. 2019 | (Family: none) | |
| JP 2013-220377 A | 28 Oct. 2013 | (Family: none) | |
| JP 2016-010798 A | 21 Jan. 2016 | US 2015/0343423 A1<br>the whole document<br>EP 2952246 A1<br>CN 105312050 A<br>US 2011/0033353 A1<br>the whole document | |
| JP 2017-159296 A | 14 Sep. 2017 | US 2014/0044627 A1<br>WO 2011/017139 A2<br>EP 2461905 A1<br>KR 10-2012-0040732 A<br>CN 102574106 A<br>CN 105944715 A<br>ES 2641241 T<br>PL 2461905 T<br>KR 10-2018-0019244 A<br>BR 112012002614 B | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018502982 W


### Non-patent literature cited in the description


- **J. HU.** *RSC Advances,* 17 August 2016, vol. 6 (85), 81767-811773